# EUROPÄISCHE PATENTSCHRIFT

(11) **EP 0 467 886 B1**
(45) Veröffentlichungstag und Bekanntmachung des Hinweises auf die Patenterteilung: **14.12.1994**
(21) Anmeldenummer: 90902107.3
(22) Anmeldetag: 01.02.1990
(51) Int. Cl.: A21C 5/00

(54) **VORRICHTUNG ZUM PORTIONIEREN VON TEIG**
DEVICE FOR DIVIDING DOUGH INTO PORTIONS
DISTRIBUTEUR DE PORTIONS DE PATE

(30) Priorität: 12.04.1989 AT 859/89
(43) Veröffentlichungstag der Anmeldung: 29.01.1992
(73) Patentinhaber: König, Elisabeth, A-8045 Graz (AT)
(72) Erfinder: König, Helmut, (AT)
(74) Vertreter: Wildhack, Helmut, Dipl.-Ing. Dr.
(86) Internationale Anmeldenummer: AT9000015
(87) Internationale Veröffentlichungsnummer: WO9011689

(56) Entgegenhaltungen:
- DE-A- 2 853 270
- DE-B- 2 717 301
- DE-B- 2 926 162
- DE-U- 8 703 747
- US-A- 3 939 360
- US-A- 3 988 668
- US-A- 4 149 412

## Beschreibung

Die Erfindung bezieht sich auf eine Vorrichtung zum Portionieren von Teig, mit einem Einfüllschacht für den Teig, der in eine Kammer führt, aus welcher der Teig durch einen Schieber zumindest einer an der Kammer vorbeibewegten, zusammen mit einer Abstreifkante die eigentliche Portionierung bewirkenden Aufnahmeöffnung am Mantel einer um eine horizontale Achse gelagerten Trommel zugeführt wird, wobei im Einfüllschacht ein vom Schieber gesondertes Vorportionierwerkzeug, vorzugsweise in Form von zwei synchron mit entgegengesetzter Drehrichtung bewegten Sternwalzen, angeordnet ist, und wobei ein Fühler für die Teigfüllmenge in der Kammer bzw. im Einfüllschacht unterhalb des Vorportionierwerkzeuges für die Steuerung des Antriebes des Vorportionierwerkzeuges vorgesehen ist, und ein Einstellglied für das von der jeweiligen Aufnahmeöffnung aufgenommene Teigvolumen vorhanden ist.

Eine Vorrichtung dieser Art ist bekannt (z.B. DE-OS 2 244 469, DE-OS 2 853 270). Bei der bekannten Konstruktion ist der Fühler von einer im Einfüllschacht oberhalb der Bahn des Schiebers höhenverstellbar gelagerten Stange gebildet, die bei Unterschreiten einer vorbestimmten Teigmenge in der Kammer den Antrieb der Sternwalzen einschaltet, so daß Teig in diese Kammer nachgefördert wird. Der durch den Schieber verdrängte Teig hebt die Stange an, wodurch der Sternwalzenantrieb wieder ausgeschaltet wird, wobei die stillstehenden Sternwalzen mit einander zugewendeten Armen den Teigdurchgang in die Kammer absperren. Bei dieser bekannten Anordnung kann es dazu kommen, daß eine größere Teigmenge die Stange festklemmt, so daß sie nicht mehr hochschwenken kann, insbesondere dann, wenn Teig zwischen der Wand des Einfüllschachtes und der Stange eingeklemmt wird.

Ferner hat es sich gezeigt, daß Schwierigkeiten dann auftreten, wenn mit derselben Vorrichtung abwechselnd Teigportionen kleineren Gewichtes mit solchen größeren Gewichtes hergestellt werden sollen. Es ist bekannt, hiezu an der Vorrichtung eine Verstelleinrichtung vorzusehen, mit welcher das Volumen der Aufnahmeöffnung an der eigentlichen Portionierstelle dem gewünschten Teigportionenvolumen angepaßt werden kann. Da es sich gezeigt hat, daß bei der Herstellung von Teigportionen kleineren Gewichtes in der den Schieber führenden Kammer ein geringeres Teigvolumen vorhanden sein soll als bei der Verarbeitung von Teigportionen größeren Gesichtes, ist es bei Vorrichtungen der eingangs beschriebenen Art bekannt, diesem Umstand durch entsprechende Verstellung des vom Fühler betätigten Schalters Rechnung zu tragen. Je größer aber das Teigvolumen in der Kammer bzw. im unterhalb der Sternwalzen liegenden Abschnitt des Einfüllschachtes wird, desto größer ist die Gefahr, daß die Fühlerstange durch den Teig blockiert wird. Je nach der blockierten Lage des Fühlers kann dies dazu führen, daß entweder durch die Sternwalzen zu wenig Teig in die Kammer nachgefördert wird, was die Gefahr von Leerportionen mit sich bringt, oder daß zuviel Teig in die Kammer gefördert wird, so daß der Teig dort bei der Bewegung des Schiebers übermäßig gequetscht wird.

Die Erfindung setzt sich zur Aufgabe, diese Nachteile zu vermeiden und eine Vorrichtung der eingangs geschilderten Art so zu verbessern, daß eine Blockierung des Fühlers durch den Teig mit Sicherheit vermieden wird, auch wenn große Teigmengen in der Kammer zu überwachen sind, oder wenn das Volumen der herzustellenden Teigportionen geändert werden soll. Die Erfindung löst diese Aufgabe dadurch, daß als Fühler zumindest zwei bewegungslose, auf die Annäherung feuchter Masse ansprechende kapazitive Fühler vorgesehen sind, die in die Innenfläche der Wand des Einfüllschachtes bzw. der Kammer übereinander eingebaut und verschiedenen Volumina der herzustellenden Teigportion zugeordnet sind, und daß zwecks Anpassung an verschiedene Volumina der herzustellenden Teigportionen der jeweils wirksame Fühler mittels eines Umschalters wählbar ist, der mit dem Einstellglied für das gewünschte Teigvolumen gekuppelt ist. Solche Fühler sind als kapazitive Näherungsindikatoren bzw. kapazitive Näherungsschalter auf anderen Gebieten der Technik bekannt. Sie beruhen auf der Änderung der Kapazitätsverhältnisse bei der Annäherung der zu überwachenden Masse, wobei sich auf dem Kapazitätsprinzip arbeitende Fühler für nicht ferromagnetische Massen eignen. Während bei den eingangs erwähnten bekannten Vorrichtungen die Relativbewegung des Fühlers in Bezug auf die Kammerwände dazu ausgenützt wird, um festzustellen, wieviel Teig in der Kammer vorhanden ist, entfällt eine solche Relativbewegung beim erfindungsgemäßen Fühler zur Gänze. Es kann daher nicht mehr zu Blockierungen der Bewegung des Fühlers kommen und jedwede auf eine solche Blockierung zurückzuführende Fehlanzeige ist vermieden. Ein weiterer Vorteil der Verwendung eines elektrisch-kapazitiven Fühlers liegt darin, daß ein solcher Fühler, zweckmäßige Empfindlichkeit vorausgesetzt, erst anspricht, wenn eine wesentliche Teigmasse in seine Nähe kommt, nicht aber bereits bei geringen Teigmassen. Damit werden Fehlanzeigen vermieden, die auf geringe Teigmassen zurückzuführen sind, z.B. durch Teigreste, die an den Sternwalzen oder an den Wänden des Einfüllschachtes hängengeblieben sind und dann herabfallen. Während bei der eingangs beschriebenen bekannten Ausführungsform der Fühler im lichten Querschnitt des Einfüllschachtes liegen muß, wenn er seine Funktion erfüllen soll, behindert bei der erfindungsgemäßen Ausführungsform der Fühler den Teigdurchgang in keiner Weise.

Die Erfindung löst ferner das Problem der Umstellung der Vorrichtung auf unterschiedliche Teigportionenvolumina bzw. -gewichte so, daß nachteilige Beeinflussungen der Fühlertätigkeit vermieden sind. Bei der Umstellung von einem Teigportionenvolumen auf ein anderes braucht also lediglich der dem neuen Volumen zugeordnete Fühler eingeschaltet und der dem früheren Volumen zugeordnete Fühler ausgeschaltet zu werden, um sich an die neuen Verhältnisse anzupassen. Die Kupplung des Umschalters für die kapazitiven Fühler mit dem Einstellglied erleichtert diese Umstellung und vermeidet Fehlbedienungen. Die Anordnung mehrerer Fühler im Einfüllschacht bereitet durch den Einbau dieser Fühler in die Einfüllschachtwand bzw. die Kammerwand keine Schwierigkeiten.

Gemäß einer bevorzugten Ausführungsform der Erfindung ist jeder Fühler mit der Innenfläche der Wand des Einfüllschachtes bzw. der Kammer bündig abschließend angeordnet. Dies ergibt die geringsten Reibungswiderstände für den im Einfüllschacht bzw. der Kammer gleitenden Teig.

Aus der US-PS 3 939 360 ist es bekannt, kapazitive Näherungsfühler in Streifenform auf die Außenwand einer Infusionsflasche aufzubringen, um den Füllstand der Infusionslösung in der Flasche zu überwachen. Eine solche Anordnung wäre bei einer erfindungsgemäßen Teigportioniervorrichtung nicht sinnvoll.

Besonders vorteilhaft ist es, mit dem Umschalter und dem Einstellglied auch ein Verstellglied für die Veränderung des Wirkraumes einer im Bereich des oberen Trommelscheitels angeordneten Wirkvorrichtung zu kuppeln. Auf diese Weise wird automatisch auch dem Umstand Rechnung getragen, daß eine größere Teigportion mehr Platz für den Wirkvorgang braucht.

Zumeist sind Vorrichtungen der eingangs geschilderten Art so gebaut, daß die Aufnahmeöffnungen in mehreren Reihen am Trommelumfang angeordnet sind, wobei jede Reihe mehrere Aufnahmeöffnungen enthält. Bei einer solchen Ausführungsform ist es im Rahmen der Erfindung zweckmäßig, wenn sich jeder Fühler in Form einer Leiste über im wesentlichen die gesamte Länge jener Wand der Kammer erstreckt, die zur Achse der Trommel parallel und der Trommel benachbart verläuft. Der Fühler ist daher für sämtliche Aufnahmeöffnungen einer Reihe gemeinsam und an jener Wand angeordnet, an der der Teig durch den Schieber bei dessen Vorwärtsbewegung in erster Linie hochgedrückt wird.

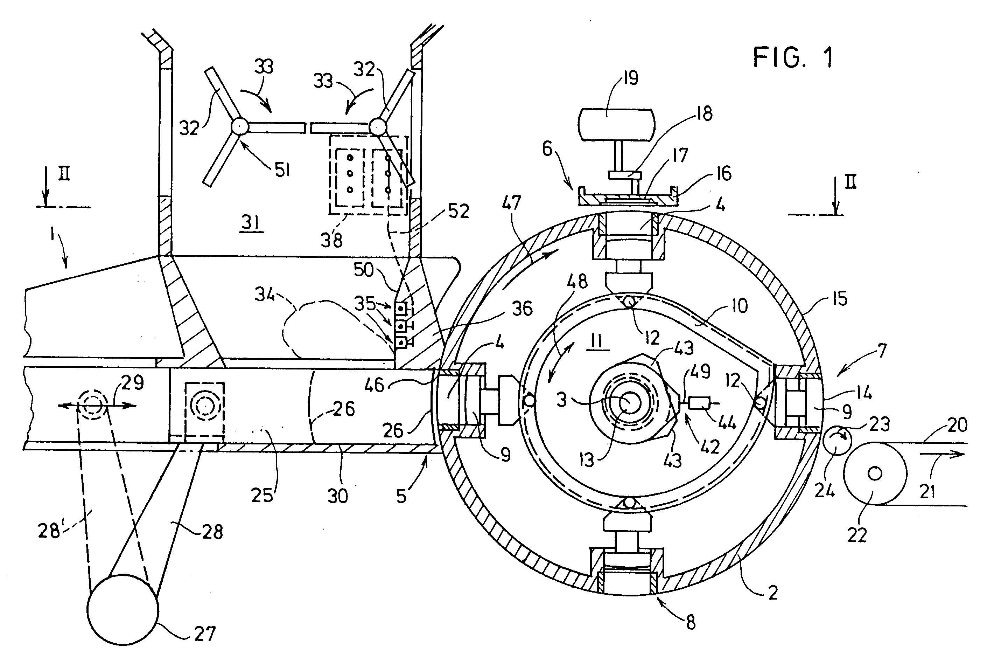

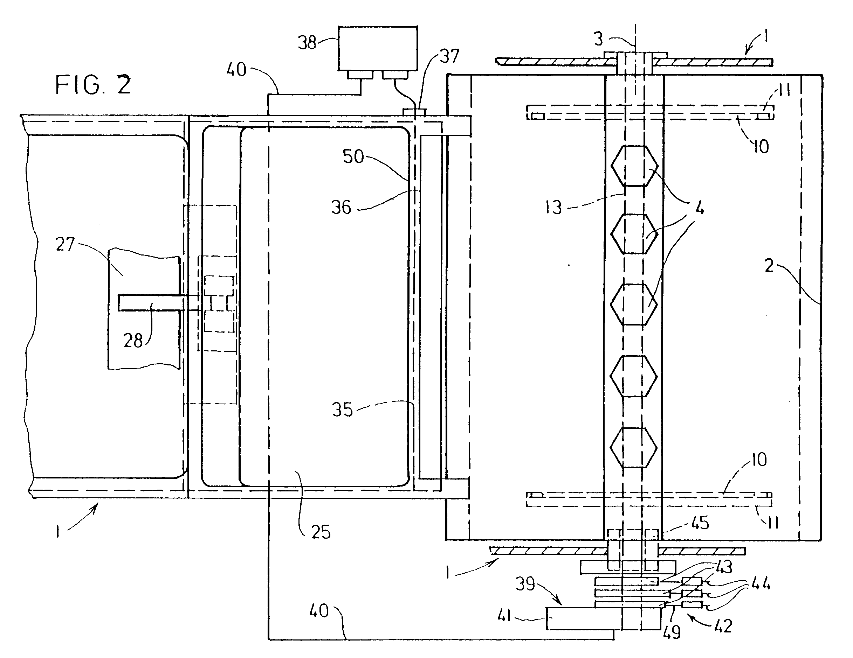

In der Zeichnung ist ein Ausführungsbeispiel der Erfindung schematisch dargestellt. Fig.1 zeigt einen Vertikalschnitt durch die Vorrichtung, Fig.2 eine Draufsicht auf dieselbe, teilweise im Schnitt.

In einem Gestell 1 ist eine Trommel 2 um eine horizontale Achse 3 drehbar gelagert. Am Mantel der Trommel 2 sind eine Vielzahl von Aufnahmeöffnungen 4 für den zu portionierenden Teig in vier achsparallelen Reihen in gleichmäßigen Abständen um den Umfang der Trommel 2 verteilt angeordnet. Um den Umfang der Trommel 2 verteilt sind eine Portionierstation 5, eine Wirkstation (Schleifstation 6, eine Auswerfstation 7 und eine weitere Station 8 angeordnet, welch letztere als Leerstation ansgebildet sein kann, jedoch auch für Sonderzwecke, z.B. Bestaubung oder Beölung der Aufnahmeöffnungen 4, ausgenützt sein kann. Die Trommel 2 ist schrittweise derart angetrieben, daß die Aufnahmeöffnungen 4 bei jedem Schritt um eine Station weiterbewegt werden. In jeder Aufnahmeöffnung 4 ist ein Kolben 9 in radialer Richtung verschiebbar geführt, der im Inneren der Trommel 2 in Kurvenbahnen 10 einer Kurvenscheibe 11 geführt ist. Zweckmäßig sind zwei solche Kurvenscheiben 11 vorgesehen (Fig.2), die an den beiden Stirnenden der Trommel 2 auf eine mittige Welle 13 der Trommel 2 aufgekeilt sind. In den einander zugeordneten Kurvenbahnen 10 der beiden Kurvenscheiben 11 sind die Kolben 9 mittels Stangen 12 (Fig.1) geführt. Die Welle 13 ist durch einen nicht dargestellten Antrieb so oszillierend in Richtung des Doppelpfeiles 48 angetrieben, daß sich die Kurvenscheiben 11 während des Weiterschaltens der Trommel 2 um einen Schritt mit der Trommel mitdrehen, wobei während dieser Fortschaltbewegung der Trommel 2 keine Relativbewegung der Kurvenscheiben 11 in Bezug auf die Trommel 2 auftritt und daher auch keine Verschiebung der Kolben 9 in den Aufnahmeöffnungen 4. Während des Stillstandes der Trommel 2 zwischen zwei aufeinanderfolgenden Vorschubschritten werden jedoch die Kurvenscheiben 11 in die Ausgangslage zurückgeführt, wodurch entsprechend dem Verlauf der Kurvenbahnen 10 die Kolben 9 in den Aufnahmeöffnungen 4 vorgeschoben oder zurückgezogen werden. Die Kurvenbahnen 10 sind hiebei so geformt, daß an der Portionierstelle 5 während des Trommelstillstandes eine Zurückziehung des Kolbens 9 in der Aufnahmeöffnung 4 stattfindet, was auf den in die Aufnahmeöffnung 4 einzubringenden Teig einen Ansaugeffekt ausübt. An der Wirkstation 6 werden die Kolben, ausgehend von der in der Portionierstation 5 erreichten Endlage, allmählich noch weiter in den Aufnahmeöffnungen 4 zurückgezogen, so daß dem Teigstück während des Schleifvorganges Platz für den Übergang in eine annähernd kugelige Gestalt geschaffen wird. An der Auswerfstation 7 hingegen wird jeder Kolben 9 während des Stillstandes der Trommel 2 vorgeschoben, bis die Stirnfläche 14 des Kolbens 9 bündig ist mit der Außenmantelfläche 15 der Trommel 2. In dieser Lage können die Kolben 9 in der Leerstation 8 verbleiben, sie können jedoch auch vor Erreichen dieser Station schon zurückgezogen werden, wie dies Fig.1 zeigt.

Es ist jedoch auch möglich, die erwähnten Bewegungen der Kolben 9 in den Aufnahmeöffnungen 4 durch außerhalb der Trommel 2 liegende Kurvenscheiben 11 zu erreichen, wobei auch mehrere Kurvenscheiben bzw. auf Schwenkhebeln od.dgl. angeordnete Kurvenbahnen vorgesehen sein können, deren jeweils eine je einer Station zugeordnet ist.

An der im Bereich des oberen Scheitels der Trommel 2 angeordneten Wirkstation 6 ist ein in bekannter Weise ausgebildetes Wirkwerkzeug 16 vorgesehen, welches von einer mit abgestuften Vertiefungen 17 versehenen Platte gebildet ist. Es liegt jeweils eine dieser Vertiefungen 17 über einer Aufnahmeöffnung 4 während des Wirkvorganges des in der Aufnahmeöffnung 4 befindlichen Teigstückes. Das Wirkwerkzeug 16 wird durch einen Exzenterantrieb 18 von einem Motor 19 zu einer kreisenden Bewegung angetrieben, wodurch die oberfläche des in der Aufnahmeöffnung 4 befindlichen Teigstückes von dem Rand der Vertiefung 17 mitgenommen und infolge der kreisenden Bewegung allmählich in eine kugelige Gestalt übergeführt wird.

An der Auswerfstation 7 ist ein Förderband 20 angeordnet, das in Richtung des Pfeiles 21 angetrieben wird und über eine der Trommel 2 benachbarte, jedoch von ihrem Umfang in geringem Abstand liegende Umlenkwalze 22 geführt ist. Der Spalt zwischen dieser Umlenkwalze 22 und dem Außenmantel 15 der Trommel 2 ist durch eine zur Drehbewegung in Richtung des Pfeiles 23 angetriebene Übergabewalze 24 überbrückt, welche die von den Kolben 9 ausgeworfenen Teigstücke sanft auf das Förderband 20 leitet.

An der Portionierstation 5 wird der Teig in die Aufnahmeöffnungen 4 durch einen Schieber 25 eingedrückt, dessen Stirnfläche 26 entsprechend der Trommelmantelfläche 15 gekrümmt ist. Der Schieber 25 ist durch einen von einer Welle 27 aus verschwenkten Schwenkhebel 28 in Richtung des Doppelpfeiles 29 angetrieben. Seine vordere Grenzlage ist mit voll ausgezogenen Linien dargestellt, seine hintere Totpunktlage mit strichlierten Linien. Der Schieber 25 ist in einer Kammer 30 geführt, in die der zu portionierende Teig vorportioniert aus einem Einfüllschacht 31 gelangt, in welchem ein Vorportionierwerkzeug 51 angeordnet ist, das von zwei dreiarmigen Sternwalzen 32 gebildet ist, die um zu einander parallele horizontale Achsen drehbar gelagert sind. Jede der beiden Sternwalzen für sich ist nur in der einen Richtung (Pfeile 33) drehbar, so daß die beiden Sternwalzen 32 gegensinnig, jedoch synchron und intermittierend umlaufen. In der in Fig.1 dargestellten Stillstandsphase der intermittierenden Drehbewegung sperren die beiden Sternwalzen 32 mit den aufeinander zugewendeten Armen den Teigdurchgang durch den Einfüllschacht 31 ab. Werden die Sternwalzen 32 jedoch zur Drehbewegung angetrieben, so fördern sie ein Teigstück in den unterhalb der Sternwalzen 32 liegenden Abschnitt des Einfüllschachtes 31 und somit in die Kammer 30. Um zu vermeiden, daß in der Kammer 30 zu viel Teig 34 vorhanden ist, wodurch bei der Bewegung des Schiebers 25 der Teig in unzulässiger Weise verquetscht werden könnte, sind drei auf die Annäherung feuchter Masse ansprechende kapazitive Fühler 35 in jene Wand 36 der Kammer 30 bzw. des unteren Abschnittes des Einfüllschachtes 31 eingebaut, die parallel zur Achse 3 der Trommel 2 verläuft und der Trommel 2 benachbart ist. Jeder dieser Fühler 35 hat die Form einer Leiste, die sich über im wesentlichen die gesamte Länge jener Wand 36 erstreckt und mit der Innenfläche 50 der Wand 36 bündig abschließt. Von den Fühlern 35 ist jeweils nur einer wirksam. Jeder Fühler 35 ist in den Antrieb der Sternwalzen 32 so eingeschaltet, daß der Fühler 35 diesen Antrieb nur dann in Gang läßt, wenn das Volumen des Teiges 34 in der Kammer 30 einen vorbestimmten Wert unterschritten hat. Sobald dies der Fall ist, fördern die Sternwalzen 32 den Teig in die Kammer 30 nach. Diese nachgelieferte Teigmenge kann eine vorbestimmte Teigmenge sein, die sich aus einer Drehung der Sternwalzen 32 um einen bestimmten Winkel ergibt, oder es kann die Anordnung so getroffen sein, daß der Fühler 35 bei Erreichen eines bestimmten Teilvolumens in der Kammer 30 den Antrieb der Sternwalzen 32 wieder ausschaltet.

Die Anordnung dreier Fühler 35 übereinander trägt dem Umstand Rechnung, daß das Teigvolumen in der Kammer 30 dem Volumen der herzustellenden Teigportionen angepaßt werden soll. Sind daher kleinere Teigportionen herzustellen, so wird der unterste der Fühler 35 eingeschaltet, bei größeren herzustellenden Teigportionen der mittlere Fühler und bei großen Teigportionen der oberste, dem größten Teigvolumen in der Kammer 30 entsprechende Fühler 35. Hiezu sind die Fühler über einen Umschalter 37 (Fig.2) wahlweise einschaltbar, so daß jeweils einer der Fühler 35 über eine Leitung 52 mit einer Steuerschaltung 38 für den Antrieb der Sternwalzen 32 verbunden ist. Der Umschalter 37 kann mit einem Einstellglied 39 mechanisch oder elektrisch, z.B. über eine Leitung 40 gekuppelt sein, mit welchem das Teigvolumen der herzustellenden Teigportion einstellbar ist. Dieses Einstellglied 39 kann z.B. ein Getriebe, insbesondere ein Schneckengetriebe, beinhalten, mit welchem die Relativlage eines Schwenkarmes 41 in Bezug auf die die Kurvenscheiben 11 tragende Welle 13 veränderbar ist. An dem Schwenkarm 41 greift eine Schubkurbel an, mit welcher die oszillierende Bewegung der Welle 13 bzw. der auf sie aufgekeilten Kurvenscheiben 11 erzielt wird. mittels dieses Einstellgliedes 39 laßt sich daher auch die Relativlage der Kurvenscheiben 11 in Bezug auf die Trommel 2 verstellen, was gleichbedeutend ist mit einer Vorschiebung bzw. Zurückziehung der Kolben 9 in den Aufnahmeöffnungen 4. Dadurch läßt sich, entsprechende Gestaltung der Kurvenbahnen 10 vorausgesetzt, an der Portionierstation 5 ein größeres oder kleineres Aufnahmevolumen der Aufnahmeöffnung 4 einstellen und damit das Volumen der portionierten Teigstücke verändern.

Es ist weiters zweckmäßig, wenn mit dem Umschalter 37 für die Fühlerumschaltung und dem Einstellglied 39 für das Volumen der herzustellenden Teigportionen auch ein Verstellglied 42 für die Veränderung der Wirkverhältnisse für das Wirkwerkzeug 16 an der Wirkstation 6 gekuppelt ist. Es kann z.B. der Wirkraum (Volumen oder Aufnahmeöffnung 4 an der Wirkstation 6) verändert werden. Hiezu können die Kolben 9 an der Wirkstation 6 mittels des Einstellgliedes 39 in analoger Weise verstellt werden, wie dies für die Portionierstation 5 beschrieben wurde. Dadurch läßt sich dem Umstand Rechnung tragen, daß eine größere Teigportion ein größeres Endvolumen der diese Portion beim Wirkvorgang aufnehmenden Aufnahmeöffnung 4 erfordert. Wie im Zusammenhang mit der Veränderung des Volumens der Aufnahmeöffnung 4 an der Portionierstation 5 beschrieben, kann bei dieser Veränderung durch eine geeignete Elektronik eine automatische Umschaltung auf den dem jeweiligen Teigvolumen entsprechenden Fühler 35 erfolgen.

Zusätzlich hiezu kann für jeden der Fühler 35 eine gesonderte Einrichtung vorhanden sein, mit der die Rückzugbewegung der Kolben 9 während des Wirkvorganges zeitweilig unterbrochen werden kann, was ebenfalls einer Veränderung des Wirkraumes der Wirkvorrichtung zwecks Anpassung an das durch die Wahl des Fühlers gegebene Teigvolumen entspricht. Hiezu ist auf die Welle 13 an der einen Stirnseite der Trommel 2 für jeden Fühler 35 eine Nockenscheibe 43 aufgekeilt, insgesamt also drei Nockenscheiben, deren jede mit einem Ausschalter 44 zusammenarbeitet, der in den Anspeisungskreis einer Magnetkupplung gelegt ist, die den Schwenkarm 41 bzw. die Nockenscheiben 43 mit der die Kurvenscheiben 11 tragenden Welle 13 kuppelt. Sobald die Nocke der betreffenden Nockenscheibe 43 auf einen Kontaktarm 49 des ihr zugeordneten Ausschalters 44 aufläuft, bleiben die Welle 13 und mit ihr die Kurvenscheiben 11 für eine bestimmte Zeit lang stehen, so lange, bis die Nocke der Nockenscheibe 43 wieder vom Kontaktarm des Ausschalters 44 abgleitet. Damit wird erreicht, daß während des Wirkvorganges nicht nur die Trommel 2 stillsteht, sondern für die erwähnte Zeitspanne auch die Kurvenscheiben 11, so daß während dieser Zeitspanne die Kolben 9 in den Aufnahmeöffnungen 4 stillstehen. Dadurch wird gewährleistet, daß zu Beginn des Wirkvorganges der Kolben 9 in der Aufnahmeöffnung 4 zurückgezogen wird, (solange eine Relativverdrehung zwischen Trommel 2 und Kurvenscheiben 11 stattfindet), sodann in dieser teilweise zurückgezogenen Stellung für die erwähnte Zeitspanne verharrt und schließlich nach Wiedereinschaltung des Antriebes der Welle 13 über den Restteil der Rückzugsstrecke zurückbewegt wird. Dadurch wird dem Teigstück eine optimale Spannung beim Wirkvorgang verliehen und schließlich nach Ausbildung des balligen bzw. kugeligen Teigstückes das Volumen der Aufnahmeöffnung 4 noch etwas vergrößert, so daß sich das bereits geschlossene Teigstück gut vom Wirkwerkzeug 16 bzw. dessen Vertiefungen ablöst. Durch Änderung der Zeitdauer, über welche der Drehantrieb der Welle 13 unterbrochen ist, läßt sich diese Stillstandsphase problemlos der jeweils vorliegenden Teigstücksorte, insbesondere dem Volumen der Teigportion, anpassen. Hiezu können die Nocken der Nockenscheiben 43 nicht nur nach verschiedenen Richtungen weisen (wie dies Fig.1 übertrieben zeigt), sondern auch verschiedenes Profil haben. Gegebenenfalls können auch weitere Nockenscheiben auswechselbar sein, um sich an Spezialverhältnisse anpassen zu können.

Die erwähnte Unterbrechung der Rückzugsbewegung der Kurvenscheiben 11 und damit der Kolben 9 in den Aufnahmeöffnungen 4 läßt sich auch dadurch erreichen, daß der Hauptantrieb für die Trommelwelle 13 bzw. die Kurvenscheiben 11 für eine vorbestimmte, zweckmäßig einstellbare und wählbare, Zeitspanne ausgeschaltet wird, wobei jedoch der Antrieb für das Wirkwerkzeug 16 weiterläuft. Hiezu kann eine Anordnung gewählt werden, wie sie etwa in der österreichischen Patentschrift Nr. 352 653 beschrieben ist, z.B. eine vom Hauptmotor angetriebene Welle, auf der eine Nockenscheibe sitzt, die eine mit einem Schalter zusammenwirkende Schaltnocke hat, welche einen Schalter zur Aus- bzw. Einschaltung des Antriebes der Trommelwelle 13, zweckmäßig über eine Magnetkupplung, hat. Es ist auch möglich, durch den Schalter einen Zeitschalter zu betätigen, welcher den Antrieb für die Trommelwelle eine vorbestimmte, zweckmäßig einstellbare, Zeitspanne hindurch ausgeschaltet hält. Dieser Schalter und bzw. oder die Schaltnocke können verstellbar angeordnet sein, wodurch sich weitere Einstellungsmöglichkeiten ergeben.

## Patentansprüche

1. Vorrichtung zum Portionieren von Teig, mit einem Einfüllschacht (31) für den Teig, der in eine Kammer (30) führt, aus welcher der Teig durch einen Schieber (25) zumindest einer an der Kammer (30) vorbeibewegten, zusammen mit einer Abstreifkante (46) die eigentliche Portionierung bewirkenden Aufnahmeöffnung (4) am Mantel (15) einer um eine horizontale Achse (3) gelagerten Trommel (2) zugeführt wird, wobei im Einfüllschacht (31) ein vom Schieber (25) gesondertes Vorportionierwerkzeug (51), vorzugsweise in Form von zwei synchron mit entgegengesetzter Drehrichtung (33) bewegten Sternwalzen (32), angeordnet ist, und wobei ein Fühler (35) für die Teigfüllmenge in der Kammer (30) bzw. im Einfüllschacht (31) unterhalb des Vorportionierwerkzeuges (51) für die Steuerung des Antriebes des Vorportionierwerkzeuges (51) vorgesehen ist, und ein Einstellglied (39) für das von der jeweiligen Aufnahmeöffnung (4) aufgenommene Teigvolumen vorhanden ist, dadurch gekennzeichnet, daß als Fühler (35) zumindest zwei bewegungslose, auf die Annäherung feuchter Masse ansprechende kapazitive Fühler vorgesehen sind, die in die Innenfläche (50) der Wand (36) des Einfüllschachtes (31) bzw. der Kammer (30) übereinander eingebaut und verschiedenen Volumina der herzustellenden Teigportion zugeordnet sind, und daß zwecks Anpassung an verschiedene Volumina der herzustellenden Teigportionen der jeweils wirksame Fühler mittels eines Umschalters (37) wählbar ist, der mit dem Einstellglied (39) für das gewünschte Teigvolumen gekuppelt ist.

2. Vorrichtung nach Anspruch 1, dadurch gekennzeichnet, daß jeder Fühler (35) mit der Innenfläche (50) bündig abschließt.

3. Vorrichtung nach Anspruch 1 oder 2, dadurch gekennzeichnet, daß mit dem Umschalter (37) und dem Einstellglied (39) auch ein Verstellglied (42) für die Veränderung des Wirkraumes für eine im Bereich des oberen Scheitels der Trommel (2) angeordnete Wirkvorrichtung gekuppelt ist.

4. Vorrichtung nach einem der Ansprüche 1 bis 3, dadurch gekennzeichnet, daß sich jeder Fühler (35) in Form einer Leiste über im wesentlichen die gesamte Länge jener Wand (36) der Kammer (30) bzw.des Einfüllschachtes (31) erstreckt, die zur Achse (3) der Trommel (2) parallel und der Trommel (2) benachbart verläuft.

## Claims

1. Device for dividing dough into portions, with a feeding shaft (31) for the dough which leads into a chamber (30) from which chamber the dough is conveyed by a slider (25) to at least one receiving opening (4) which is moved past the chamber (30) on the casing (15) of a drum (2) mounted about a horizontal shaft (3) and which, together with a stripping edge (46), brings about the actual division into portions, with a pre-portioning tool (51), separate from the slider (25) and preferably in the form of two star rollers (32) moved synchronously in opposite directions of rotation (33), being arranged in the feeding shaft (31), and a sensor (35) for the dough charge in the chamber (30) and/or in the feeding shaft (31) being provided under the pre-portioning tool (51) for the control of the drive of the pre-portioning tool (51), and a control element (39) for the volume of dough received by the particular acceptance opening (4) being present, characterized in that at least two static capacitive sensors responding to the approach of moist material are provided as sensors (35), which capacitive sensors are installed in the internal surface (50) of the wall (36) of the feeding shaft (31) and/or of the chamber (30) one above the other and are allocated to different volumes of the dough portions to be produced, and that, for the purpose of adapting to different volumes of the dough portions to be produced, the sensor that is effective in each case is selectable by means of a change-over switch (37) which is coupled to the control element (39) for the desired volume of dough.

2. Device according to Claim 1, characterized in that each sensor (35) sits flush with the internal surface (50).

3. Device according to Claim 1 or 2, characterized in that an adjustment element (42) for changing the working space for a working device arranged in the region of the upper crown of the drum (2) is also coupled to the change-over switch (37) and the control element (39).

4. Device according to one of Claims 1 to 3, characterized in that each sensor (35) extends in the form of a strip over substantially the entire length of that wall (36) of the chamber (30) and/or the feeding shaft (31) which runs parallel to the shaft (3) of the drum (2) and adjacent to the drum (2).

## Revendications

1. Distributeur de portions de pâte comprenant une trémie de remplissage (31) pour la pâte, qui conduit à une chambre (30), de laquelle la pâte est évacuée par un tiroir (25) vers au moins un orifice d'alimentation (4) défilant devant la chambre (30), ledit orifice assurant en fait, avec une arête de raclage (46), la véritable distribution en portions de la pâte et étant ménagé dans l'enveloppe (15) d'un tambour (2) monté sur palier autour d'un axe horizontal (3), un dispositif de pré-distribution en portions (51), indépendant du tiroir (25) et constitué de préférence par deux cylindres en étoile (32) tournant en synchronisme dans des sens de rotation (33) opposés, étant installé dans la trémie de remplissage (31), un détecteur (35) du volume de remplissage de la pâte présente dans la chambre (30) ou dans la trémie de remplissage (31) étant placé sous le dispositif de pré-distribution en portions (51) pour commander l'entraînement dudit dispositif de pré-distribution en portions (51), et un membre de réglage (39) étant prévu pour régler le volume de pâte passant par l'orifice d'alimentation (4) correspondant, caractérisé en ce que le détecteur (35) est constitué par au moins deux détecteurs capacitifs fixes réagissant à l'approche d'une masse humide, installés l'un au-dessus de l'autre sur la surface intérieure (50) de la paroi (36) de la trémie de remplissage (31) ou de la chambre (30) et correspondant à différents volumes de pâte à distribuer en portions, et en ce que le détecteur actif correspondant est susceptible d'être sélectionné, dans le but de s'adapter aux différents volumes de pâte à distribuer en portions, au moyen d'un commutateur (37), qui est couplé au membre de réglage (39) du volume de pâte désiré.

2. Distributeur selon la revendication 1, caractérisé en ce que chaque détecteur (35) affleure de manière étanche à la surface intérieure (50).

3. Distributeur selon la revendication 1 ou 2, caractérisé en ce qu'un membre ajustable (42), destiné à modifier l'espace de travail d'un dispositif actif agencé dans la partie supérieure du tambour (2), est également couplé au commutateur (37) et au membre de réglage (39).

4. Distributeur selon les revendications 1 à 3, caractérisé en ce que chaque détecteur (35) s'étend sous la forme d'une bande sur presque toute la longueur de la paroi (36) de la chambre (30) ou de la trémie de remplissage (31), qui est située au voisinage du tambour (2) et parallèlement à l'axe (3) dudit tambour (2).
